**Europäisches Patentamt**

**European Patent Office**

**Office européen des brevets**

(11) Veröffentlichungsnummer: **0 151 303**
**A2**

(12) # EUROPÄISCHE PATENTANMELDUNG

(21) Anmeldenummer: **84115992.4**

(22) Anmeldetag: **20.12.84**

(51) Int. Cl.⁴: **B 60 C 25/02**

(30) Priorität: **04.02.84 DE 3403971**

(43) Veröffentlichungstag der Anmeldung:
**14.08.85 Patentblatt 85/33**

(84) Benannte Vertragsstaaten:
**FR GB IT NL SE**

(71) Anmelder: **Gebr. Hoffmann GmbH & Co. KG**
**Postfach 4150**
**D-6100 Darmstadt(DE)**

(72) Erfinder: **Goebel, Eickhart**
**Elbestrasse 11**
**D-6102 Pfungstadt(DE)**

(74) Vertreter: **Patentanwälte Liedl, Nöth**
**Steinsdorfstrasse 21-22**
**D-8000 München 22(DE)**

(54) **Demontiereinrichtung für einen an einem Rad befestigten Reifen.**

(57) Die Erfindung betrifft eine Demontiereinrichtung für Reifen mit zwei an einem Halter drehbar gelagerten Abdrückwerkzeugen und einem auf den Reifen aufsetzbaren Gegenhalter. Die Demontiereinrichtung ist als Zange ausgebildet und die Lagerpunkte der Abdrückwerkzeuge weisen zu dem Drehpunkt der Zange unterschiedliche Abstände auf. Beim Öffnen der Zange übt das erste Abdrückwerkzeug im wesentlichen eine radial zum Rad ausgerichtete Kraftkomponente und beim weiteren Öffnen das zweite Abdrückwerkzeug eine im wesentlichen axiale zum Rad gerichtete Kraftkomponente aus.

EP 0 151 303 A2

0151303

## Demontiereinrichtung für einen an einem Rad befestigten Reifen

Die Erfindung betrifft eine Demontiereinrichtung für Reifen gemäß dem Oberbegriff des Anspruches 1.

Eine derartige Demontiereinrichtung ist aus der DE-OS 5 1 755 315 bekannt.

Durch mehrere Veröffentlichungen u.a. auch in der Zeitschrift "Gummibereifung" 60. Jahrgang, Januar 1984, Seite 62 bis 65, ist eine neue Reifen-Felgenkombination bekannt geworden, bei der der Reifensitz auf der radial innenliegenden Seite des Felgenkranzes angeordnet ist. Der Reifen greift also um die Felge von außen herum und findet seinen Halt hinter den nach radial innen geneigten Felgenhörnern. Die aus der DE-OS 1 755 315 bekannte Demontiereinrichtung ist zum Lösen derartiger Reifen von der Felge nicht geeignet, weil das einzige Abdrückwerkzeug dieser Einrichtung nur axiale Kräfte auf den Reifen ausüben kann.

- 3 -                    0151303

Aufgrund der völlig neuartigen Konzeption der Reifen-Felgenkombination sind die bisher bekannten Demontiereinrichtungen nicht geeignet, den Reifen von der Felge abzuziehen.

Aufgabe der Erfindung ist es daher, eine Demontiereinrichtung für den zuvor genannten Reifen vorzuschlagen, die geeignet ist, den Reifen schnell und problemlos von der Felge abzuziehen.

Diese Aufgabe wird bei der eingangs genannten Montagevorrichtung erfindungsgemäß durch die im kennzeichnenden Teil des Anspruches 1 enthaltenen Maßnahmen gelöst.

In den Unteransprüchen sind vorteilhafte Weiterbildungen der Erfindung angegeben.

Bei der Erfindung wird der Umstand ausgenutzt, daß die beiden Abdrückwerkzeuge auf unterschiedlichen Kreisbahnen so angeordnet werden können, daß beim Verschwenken des Abdrückhebels das eine Werkzeug auf seiner Kreisbahn mehr radial und das andere Werkzeug mehr axial geführt werden.

Fig. 4    eine Teilansicht der Demontiereinrichtung, teilweise im Schnitt, während der ersten Phase des
          Abdrückvorganges und

Fig. 5    eine Teilansicht der Demontiereinrichtung, teilweise im Schnitt, während der Endphase des
          Abdrückvorganges.

Die Einrichtung weist eine Zange 1 auf, die aus den beiden
Hebeln 2 und 3 besteht, die in dem Punkt 4 drehbar miteinander verbunden sind.

An dem unteren Hebel (Gegenhalterhebel 3) ist vorzugsweise
unter 90$^{\mathrm{o}}$ ein Gegenhalter 5 vorgesehen. Der Gegenhalter
5 kann als u-förmige Traverse ausgeführt sein. Die Länge
des Gegenhalters 5 ist größer als der größte zu verarbeitende Reifendurchmesser. An den Enden des Gegenhalters 5
können Beläge 6 vorgesehen sein, um die Reibung zwischen
dem Gegenhalter 5 und dem Reifen 23 zu vergrößern.

Im vorderen Bereich des oberen Hebels (Abdrückhebel 2)
sind Abdrückwerkzeuge 8 und 9 vorzugsweise zwischen zwei
Platten 10 drehbar gelagert. Die Drehpunkte 11 und 12 der
Abdrückwerkzeuge 8 und 9 weisen zu dem Drehpunkt 4 der Zange 1 unterschiedliche Abstände auf. Vorzugsweise ist das Abdrückelement 9 als Gabel ausgebildet, so daß das zweite Abdrückwerkzeug 8 zwischen die beiden Schenkel des ersten Abdrückwerkzeuges 9 greifen kann. Bei einer anderen Ausführungsform kann aber auch das Abdrückwerkzeug 8 als Gabel ausgeführt sein, so daß das andere Abdrückwerkzeug 9 zwischen die beiden Schenkel des Abdrückwerkzeuges 8 greifen kann.

Falls der Abstand zwischen dem Felgenring und der Felgenschüssel ausreichend groß ist, kann auch das eine Abdrückwerkzeug 9 drehfest an dem Hebel 2 der Zange 1 befestigt sein, da dann beim Abdrückvorgang keine Behinderung erfolgt.

Das zweite Abdrückwerkzeug 8 weist zwei Schenkel auf, von denen der eine als Haken ausgebildet ist. Der zweite Schenkel des Abdrückwerkzeuges 8 ist über einen Anschlag 14 gegenüber dem unteren Hebel 3 der Zange 1 abgestützt. Des weiteren ist zwischen der oberen Seite des zweiten Schenkels des Abdrückwerkzeuges 8 und dem oberen Hebel 2 der Zange 1 eine Feder 13 vorgesehen, die vorzugsweise als Blattfeder ausgebildet sein kann.

Zum Führen des Abdrückwerkzeuges 9, beim Öffnen der Zange 1 und zum Fixieren der Abdrückwerkzeuge 8 und 9 in der Ausgangslage der Zange 1 kann an der Platte 10 ein zweiter Anschlag 15 vorgesehen sein. Des weiteren ist zwischen den beiden Abdrückwerkzeugen 8 und 9 ein einstellbarer Anschlag 16 angeordnet, der an einem der Abdrückwerkzeuge 8 oder 9 befestigt sein kann.

Durch eine entsprechende Einstellung der Anschläge 14, 15 und 16 können die Abdrückwerkzeuge 8 und 9 in Ausgangsstellung der Zange 1 sicher fixiert werden. An dem Abdrückwerkzeug 9 kann weiterhin eine Feder 22 vorgesehen sein, die das Abdrückwerkzeug 9 auch in Arbeitsstellung der Zange 1 innen an das andere Abdrückwerkzeug 8 andrückt und somit ein freies Pendeln des Abdrückwerkzeuges 9 verhindert.

Am hinteren Ende des unteren Hebels 3 der Zange 1 kann ein weiterer Gegenhalter 17 verschiebbar angeordnet sein. Der Gegenhalter 17 kann mittels einer Klemmeinrichtung, z.B. einer Schraube 18, auf dem Hebel 3 festgesetzt werden. Der Gegenhalter 17 weist einen Haken 19 auf, der geeignet ist, sich über den Reifenwulst am Felgenhorn der Felge 20 abzustützen und somit radiale und axiale Kräfte aufzunehmen.

0151303

Mittels einer Aussparung 21 in dem Gegenhalter 17 können beide Hebel 2 und 3 der Zange 1 miteinander verbunden werden, wenn die Zange 1 sich in Ausgangslage befindet. Der Gegenhalter 17 muß hierzu nur um 180$^o$ nach oben gedreht werden.

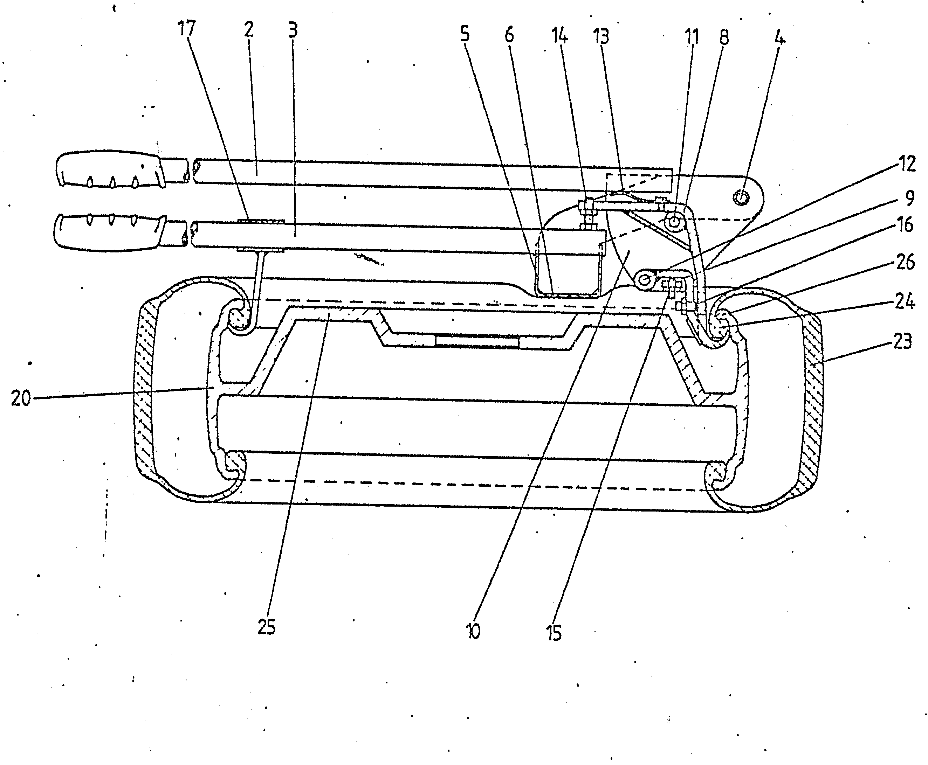

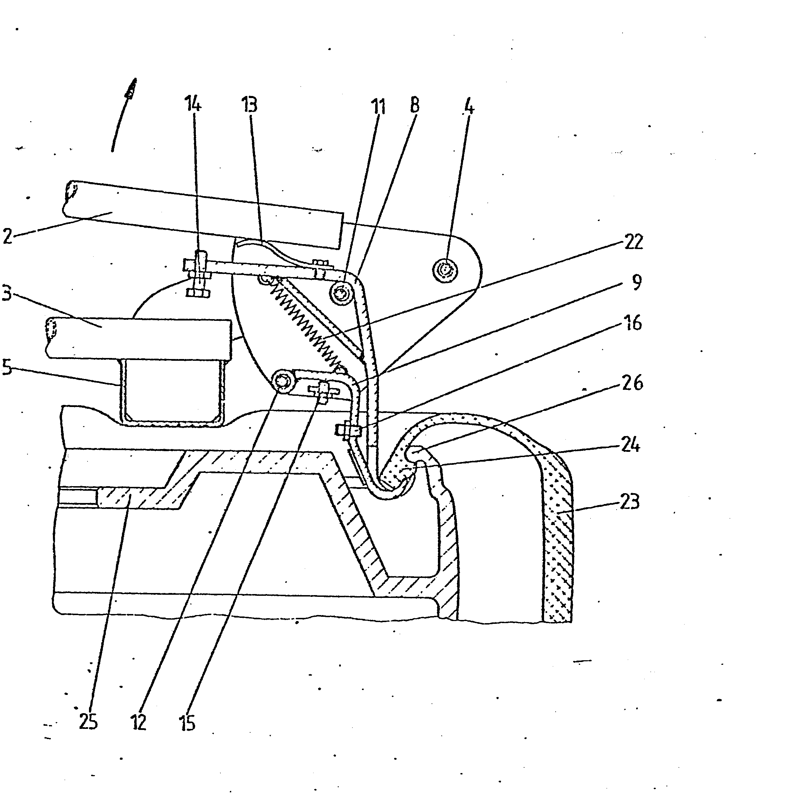

Gemäß Fig. 2 wird die Zange 1 zum Abdrücken des Reifens 23 von der Felge 20 in Ausgangslage so an das Rad 7 angesetzt, daß die Haken der Abdrückwerkzeuge 8 und 9 zwischen dem Reifenwulst 24 und der Schüssel 25 der Felge 20 in das Tiefbett der Felge 20 eingeführt werden können.

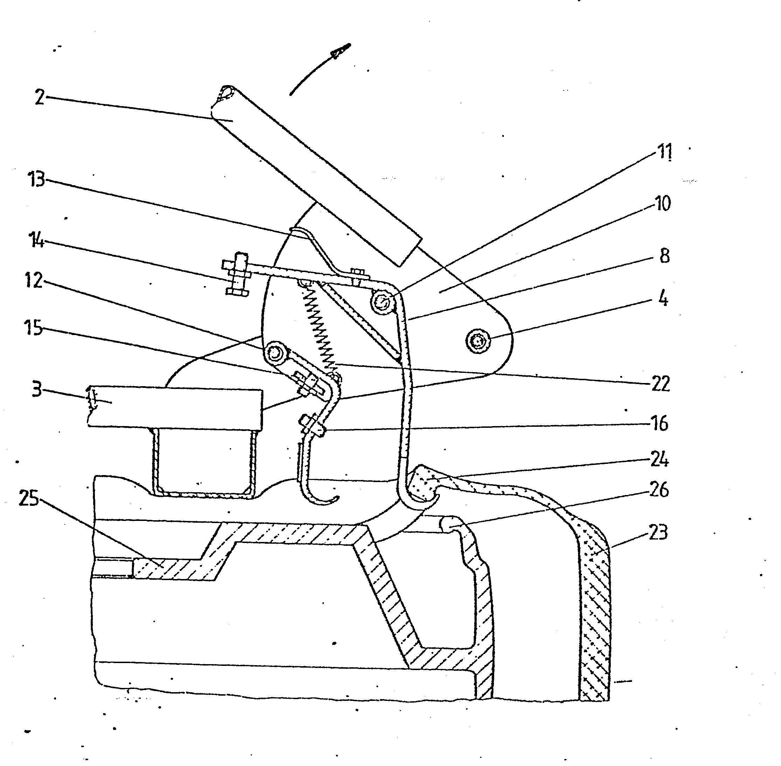

Die Zange 1 wird nachfolgend nach unten bewegt, so daß sich der Gegenhalter 5 auf dem Reifen 23 abstützt. Hierbei werden die Haken der Abdrückwerkzeuge 8 und 9 unter bzw. hinter den Reifenwulst 24 greifen. Der zweite Gegenhalter 17 wird anschließend so eingestellt und fixiert, daß der Haken 19 sich gegen die andere Seite der Felge 20 abstützt (Fig. 3).

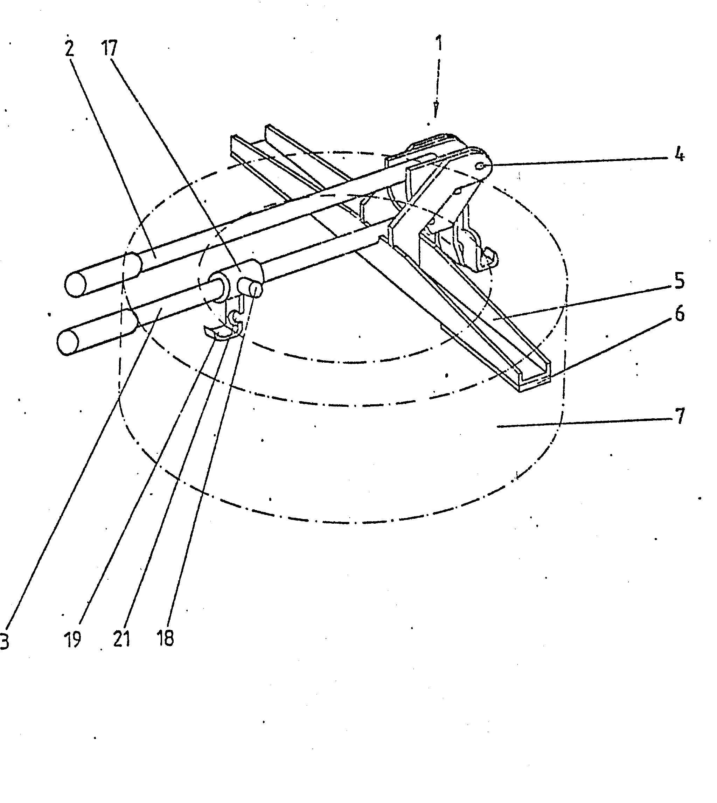

Beim Öffnen der Zange 1, hierbei wird der obere Hebel 2 gemäß Fig. 4 nach oben bewegt, wird zunächst das erste Abdrückwerkzeug 9 durch die Bewegung des Lagerpunktes 12 um den Drehpunkt 4 der Zange 1 vorwiegend radial aber auch axial zum Reifen 23 bewegt, so daß der gabelförmige Haken des Abdrückwerkzeuges 9 den Reifenwulst 24 nach innen zieht. Das zweite Abdrückwerkzeug 8 wird hierbei mittels der Feder 13 gegen den Reifenwulst 24 gedrückt, so daß der Haken des Abdrückwerkzeuges 8 mit Sicherheit hinter den Reifenwulst 24 greift. Die radiale Kraftkomponente kann hierbei durch den Haken 19 des Gegenhalters 17 in Verbindung mit der Klemmeinrichtung 18 und/oder durch die Reibbeläge 6 des Gegenhalters 5 aufgenommen werden.

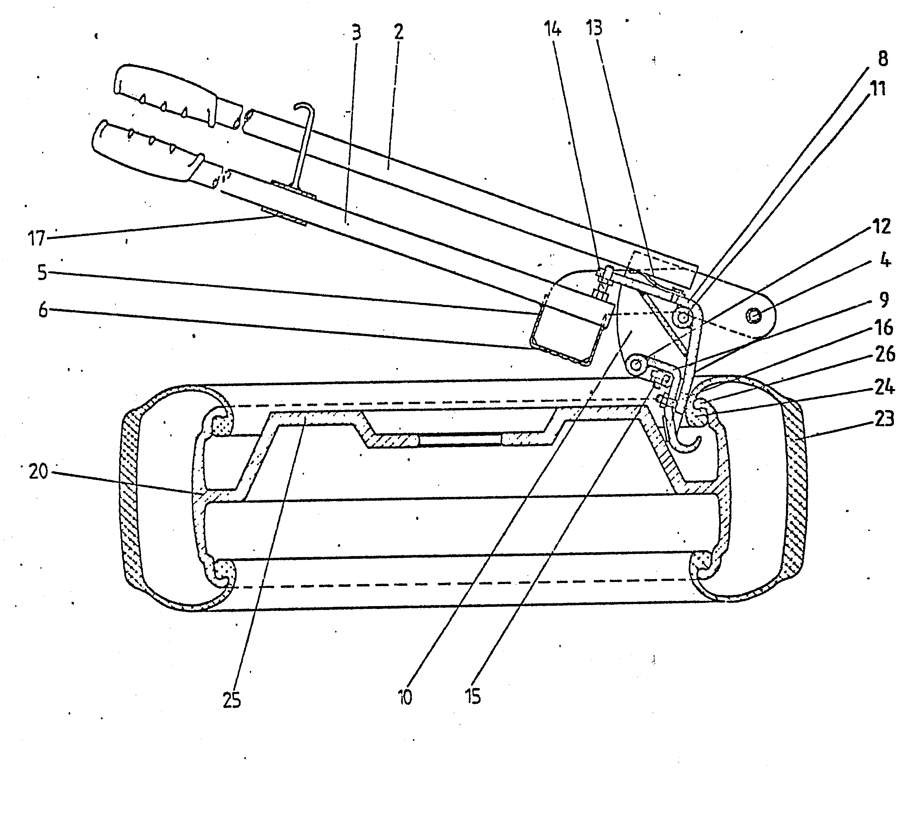

Beim weiteren Öffnen der Zange 1 wird das zweite Abdrückelement 8, gemäß Fig. 5, den Reifenwulst über das Felgenhorn 26 der Felge 20 ziehen.

Sobald der Reifen 23 an einer Stelle über das Felgenhorn 26 gezogen ist, kann der Reifen einfach und ohne Kraftanstrengung vollständig demontiert werden.

2.  Demontiereinrichtung nach Anspruch 1, dadurch gekennzeichnet,

daß die Abdrückwerkzeuge (8, 9) am vorderen Ende des Abdrückhebels (2) angeordnet sind und die Lagerpunkte (11,
12) der Abdrückwerkzeuge (8, 9) zur Schwenkachse (4) der
Zange (1) unterschiedliche Abstände aufweisen.


3.  Demontiereinrichtung nach Anspruch 1 oder 2, dadurch
gekennzeichnet, daß das eine Abdrückwerkzeug (9) an einem Ende als Gabel
ausgebildet ist, so daß das andere Abdrückwerkzeug (8)
zwischen die beiden Schenkel des ersten Abdrückwerkzeuges
(9) am Reifenwulst (24) angreifen kann.


4.  Demontiereinrichtung nach einem der Ansprüche 1 bis 3,
dadurch gekennzeichnet,

daß eines der Abdrückwerkzeuge (9) drehfest am Abdrückhebel (2) der Zange (1) gelagert ist.


5.  Demontiereinrichtung nach Anspruch 1, dadurch gekennzeichnet,

Patentansprüche:

1. Demontiereinrichtung für einen an einem Rad befestigten Reifen (23) in Form einer Zange (1), die zwei in einer Schwenkachse (4) an ihren einen Enden miteinander verbundene Hebel (2, 3) aufweist, von denen der eine Hebel (Gegenhalterhebel 3) als auf das Rad aufsetzbarer Gegenhalter (5) ausgebildet und durch den anderen Hebel (Abdrückhebel 2) ein Abdrückwerkzeug betätigt ist, das beim Verschwenken des Abdrückhebels (2) eine axiale Kraftkomponente zum Lösen des Reifens (23) von einer Radfelge (20) auf diesen ausübt, dadurch gekennzeichnet,

daß am Abdrückhebel (2) zwei hakenförmige Abdrückwerkzeuge (8, 9) angelenkt sind, die beim Verschwenken des Abdrückhebels (2) aus einer gemeinsamen Ausgangslage auf verschiedenen Kreisbahnradien um die Schwenkachse (4) geführt sind, wobei bezüglich des Rades das eine Abdrückwerkzeug (9) mehr radial zur Radachse und das andere Abdrückwer-zeug (8) mehr axial vom Rad weg geführt ist.

daß der Gegenhalter (5) im Winkel von 90$^\circ$ zur Zange (1) angeordnet ist.

6. Demontiereinrichtung nach Anspruch 5, dadurch gekennzeichnet,

daß die dem Reifen (23) zugewandte Seite des Gegenhalters (5) mit einem Reibbelag (6) versehen ist.

7. Demontiereinrichtung nach Anspruch 1, dadurch gekennzeichnet,

daß am unten liegenden Gegenhalter (3) der Zange (1) ein weiterer Gegenhalter (17) verschiebbar angeordnet ist.

8. Demontiereinrichtung nach Anspruch 7, dadurch gekennzeichnet,

daß der weitere Gegenhalter (17) bezüglich der Abdrückwerkzeuge (8, 9) an der anderen Felgenseite abgestützt ist.

9. Demontiereinrichtung nach Anspruch 1, dadurch gekennzeichnet,

daß zwischen dem einen Abdrückwerkzeug (8) und dem oben liegenden Abdrückhebel (2) der Zange (1) eine Feder (13) angeordnet ist, die das Abdrückelement (8) in Richtung des Reifens (23) vorspannt.

10. Demontiereinrichtung nach Anspruch 1, dadurch gekennzeichnet,

daß an den Abdrückwerkzeugen (8, 9) Anschläge (14, 15, 16) vorgesehen sind, die die Abdrückwerkzeuge (8, 9) in Ruhestellung der Zange (1) fixieren.

Fig. 3

0151303

g:4

ig:5

Fig:1

Fig:2

3 2

14 13

8

11

17

12

5

4

6

9

16

26

24

23

20

25

10 15

0151303

- 2 -
5/5